# EUROPÄISCHE PATENTSCHRIFT

(11) **EP 2 227 846 B1**
(45) Veröffentlichungstag und Bekanntmachung des Hinweises auf die Patenterteilung: **14.10.2015**
(21) Anmeldenummer: 08866920.5
(22) Anmeldetag: 31.10.2008
(51) Int. Cl.: H02H 7/085, B23Q 11/04, B25F 5/00

(54) **VORRICHTUNG UND VERFAHREN ZUM ERGREIFEN EINER SICHERUNGSMASSNAHME BEI EINEM ELEKTROWERKZEUG**
DEVICE AND METHOD FOR TAKING A SAFETY PRECAUTION IN AN ELECTRICAL TOOL
DISPOSITIF ET PROCÉDÉ POUR PRENDRE UNE MESURE DE SÉCURITÉ POUR UN OUTIL ÉLECTRIQUE

(30) Priorität: 27.12.2007 DE 102007062727
(43) Veröffentlichungstag der Anmeldung: 15.09.2010
(73) Patentinhaber: Robert Bosch GmbH, 70442 Stuttgart (DE)
(72) Erfinder: SINGLE, Ulrich, Penang 11900 (MY); HABELE, Michael, 71111 Waldenbuch (DE)
(86) Internationale Anmeldenummer: PCT/EP2008/064825
(87) Internationale Veröffentlichungsnummer: WO 2009/083306

(56) Entgegenhaltungen:
- DE-A1-102004 004 170
- US-A- 5 789 885
- US-B1- 6 479 958

## Beschreibung

### Technisches Gebiet

Die vorliegende Erfindung betrifft eine Vorrichtung zum Ergreifen einer Sicherungsmaßnahme bei einem Elektrowerkzeug gemäß Anspruch 1 sowie ein Verfahren zum Ergreifen einer Sicherungsmaßnahme bei einem Elektrowerkzeug gemäß Anspruch 8.

### Stand der Technik

Moderne Elektrowerkzeuge erfordern spezielle Sicherheitsmechanismen, um einen Bediener des Elektrowerkzeugs bei einem unvorhergesehenen Ereignis zu schützen. Dieses Ereignis kann beispielsweise in einem Blockieren oder Verklemmen des Werkzeugs bestehen (ein solcher Fall wird von Fachleuten "Kickback" genannt). Ist kein Sicherheitsmechanismus vorhanden, können bei einem solchen Ereignis schwere Verletzungen des Bedieners auftreten. Andererseits sollten die vorgesehenen Sicherheitsmechanismen kostengünstig und einfach implementierbar sein.

Ein Ansatz zum Schutz eines Bedieners mittels eine Verfahrens zur Abschaltung einer Elektrowerkzeugmaschine in einem Blockierfall wurde bereits in der Offenlegungsschrift DE 10 2004 004 170 A1 offenbart. Entsprechend dieses Ansatzes ist das Erkennen des "Kickbackfalls" jedoch auf eine Auswertung der Drehzahl beschränkt. Dies bietet lediglich eine eingeschränkte Sicherheitsfunktion, da eine solche Auswertung nicht flexibel auf unterschiedliche Einsatzumgebungen anwendbar ist und ferner auch noch durch einen hohen Bauteilebedarf zur Detektion der Drehzahl kostenintensiv ist.

Die US 6 479 958 B1 offenbart ein Elektrowerkzeug mit einem Elektromotor, bei dem der Motorstrom gemessen und die zeitliche Änderung des Motorstroms bestimmt wird. Falls der Wert der zeitlichen Änderung des Motorstroms einen vorgegebenen Schwellenwert überschreitet, wird der Elektromotor in einem Impuls-Modus angetrieben, mittels dessen ein Blockieren oder Verklemmen des Elektrowerkzeugs behoben werden soll.

Die DE 10 2004 004 179 A1 offenbart ein Elektrowerkzeug mit einem Elektromotor, wobei der Elektromotor abgeschaltet werden soll, wenn festgestellt wird, dass das Elektrowerkzeug blockiert. Hierzu wird die zeitliche Änderung der Drehzahl des Elektromotors bestimmt, und der Elektromotor wird abgeschaltet, wenn der Wert der zeitlichen Änderung einen Schwellenwert überschreitet.

### Offenbarung der Erfindung

Die Aufgabe der vorliegenden Erfindung besteht somit darin, eine bessere Möglichkeit zum Ergreifen einer Sicherungsmaßnahme bei einem Elektrowerkzeug zu schaffen.

Die Aufgabe wird durch eine Vorrichtung zum Ergreifen einer Sicherungsmaßnahme bei einem Elektrowerkzeug mit den Merkmalen nach Anspruch 1 sowie durch ein Verfahren zum Ergreifen einer Sicherungsmaßnahme bei einem Elektrowerkzeug mit den Schritten nach Anspruch 8 gelöst. Weitere Ausgestaltungen der Erfindung sind Gegenstand von Unteransprüchen.

Die vorliegende Erfindung schafft eine Vorrichtung zum Ergreifen einer Sicherungsmaßnahme zum Schutz eines Bedieners vor einem Kickback bei einem Blockieren oder Verklemmen eines Elektrowerkzeugs, wobei das Elektrowerkzeug einen Elektromotor mit zumindest einer Feldwicklung und einer Ankerwicklung umfasst und wobei die Vorrichtung folgende Merkmale aufweist:
- eine Sensoreinheit, die ausgebildet ist, um ein Sensorsignal in Abhängigkeit von einem Motorstrom durch den Elektromotor, einer Ankerspannung über die Ankerwicklung, einer Spannung über die Feldwicklung und/oder einer Kommutierungsfrequenz an der Ankerwicklung bereitzustellen;
- eine Sensorsignal-Änderungserkennungseinheit, die ausgebildet ist, um eine zeitliche Änderung des Sensorsignals zu erkennen und auf der Basis der erkannten Änderung ein entsprechendes Änderungssignal auszugeben; und
- eine Sicherungseinheit , die ausgebildet ist, um abhängig von einem Wert des Änderungssignals, insbesondere bei einem Über- oder Unterschreiten des Wertes des Änderungssignals in Bezug auf einen Schwellenwert ein Blockieren oder Verklemmen zu erkennen und eine Sicherungsmaßnahme am Elektrowerkzeug derart zu ergreifen, dass die Energiezufuhr des Elektrowerkzeugs unterbrochen, ein mechanisches Bremsen des Elektrowerkzeugs eingeleitet, ein elektrisches oder elektromechanisches Bremsen des Elektrowerkzeugs und/oder ein Blockieren des Elektrowerkzeugs durch eine mechanische oder elektrische Vorrichtung eingeleitet wird.

Die vorliegende Erfindung basiert auf der Erkenntnis, dass durch einfachen Abgriff von Motorkenngrößen wie dem Motorstrom, der Ankerspannung über die Ankerwicklung, eine Spannung über eine Feldwicklung und/oder die Kommutierungsfrequenz an der Ankerwicklung ein Belastungszustand des Elektrowerkzeugs erfasst werden kann. Dies bietet den Vorteil, dass keine aufwendigen Sensoren zur Erfassung der Drehzahl an der Motorwelle oder andere spezielle Schaltungen erforderlich sind. Weiterhin kann durch die Bestimmung der zeitlichen Änderung des Sensorsignals in unterschiedlichen Arbeitsszenarien ein Blockier- oder Verklemmfall erkannt werden, wenn ein Schwellenwert über- bzw. unterschritten wird. Beispielsweise kann auf diese Art eine bessere Unterscheidung des Verklemmens oder Blockierens des Werkzeugs bei einerseits einer langsamen Arbeitsgeschwindigkeit und andererseits einer schnellen Arbeitsgeschwindigkeit getroffen werden. Dies resultiert daraus, dass nur noch die zeitliche Änderung des Beiastungszustandes des Elektrowerkzeugs für das Auslösen der Sicherheitsfunktion, nicht dagegen die entsprechenden absoluten Kenngrößen relevant sind. Somit kann bei Verwendung des erfindungsgemäßen Ansatzes einerseits durch einfache Abgriffspunkte im Elektromotor des Elektrowerkzeugs eine kostengünstige Implementierung realisiert werden und andererseits eine sehr präzise Auslösung der Sicherungsmaßnahme bei einem Auftreten von einem sicherheitskritischen Zustand erfolgen. Mit besonderem Vorteil gegenüber dem Stand der Technik basiert die Erfindung auf einem gezielten Einleiten einer Sicherungsmaßnahme in Gestalt einer Blockierung, eines Bremsens oder eines Anhaltens des Elektrowerkzeugs und damit eines schnellen und sicheren Schutzes des Bedieners vor Verletzungen.

In einer besonderen Ausführungsform sind die Sensorsignal-Änderungserkennungseinheit und/oder die Sicherungseinheit ausgebildet, um eine digitale Signalverarbeitung durchzuführen. Dies bietet den Vorteil, dass die bereits zur Steuerung der Elektrowerkzeuge vielfach eingesetzten digitalen Schaltungen zugleich für die Auslösung der Sicherungsmaßnahme verwendet werden können. Zugleich bietet die Verwendung von digitalen Bauteilen die Möglichkeit, eine Auslösung sehr robust und zuverlässig auch bei Alterungserscheinungen von elektronischen Bauelementen zu machen und zugleich eine hohe Präzision und Konstanz der Auslösung der Sicherungsmaßnahme gewährleisten zu können.

Günstig ist es auch, wenn die Sensorsignal-Änderungserkennungseinheit ausgebildet ist, um vor dem Erkennen einer zeitlichen Änderung des Sensorsignals eine Filterung des Sensorsignals durchzuführen. Dies bietet den Vorteil, dass mögliche Störungen auf dem Sensorsignal unterdrückt oder zumindest gedämpft werden können, so dass eine höhere Präzision bei der Auslösung der Sicherungsmaßnahme sichergestellt werden kann. Somit wird die Wahrscheinlichkeit einer ungewünschten Auslösung der Sicherungsmaßnahme und der damit verbundenen Probleme für den Bediener vermieden oder zumindest seltener.

Auch kann die Sensorsignal-Änderungserkennungseinheit ausgebildet sein, um eine Filterung auf der Basis einer linearen, nicht-linearen und/oder gewichteten Filterfunktion durchzuführen oder einer Fourier-Transformation des Sensorsignals durchzuführen. Dies bietet die Möglichkeit, bei der Verwendung von digitalen Bauelementen eine hohe Präzision bei der Auswertung des Sensorsignals sicherzustellen. Zugleich kann durch die Verwendung der Fourier-Transformation auch eine Zerlegung des Sensorsignals in seine Frequenzkomponenten erfolgen, die insbesondere bei der Aufnahme der Kommutierungsfrequenz an der Ankerwicklung des Elektromotors eine Detektion einer schnellen Frequenzänderung und damit eine Auslösung mit kurzer Reaktionszeit ermöglicht. Insbesondere vorteilhaft ist, in diesem Zusammenhang, die Anwendung einer FFT (FFT = Fast Fourier-Transform = schnelle Fourier-Transformation) in Betracht zu ziehen, die die Durchführung einer sehr schnellen Transformation ermöglicht.

Auch kann in einer weiteren Ausführungsform die Sensoreinheit ausgebildet sein, um in Abhängigkeit von einem Motorstrom durch den Elektromotor, einer Ankerspannung über die Ankerwicklung, einer Spannung über die Feldwicklung und/oder einer Kommutierungsfrequenz an der Ankerwicklung ein zweites Sensorsignal bereitzustellen, das sich vom Sensorsignal unterscheidet. Ferner kann in dieser Ausführungsform die Sensorsignal-Änderungserkennungseinheit ausgebildet sein, um eine zeitliche Änderung des zweiten Sensorsignals zu erkennen und auf der Basis der erkannten Änderung ein entsprechendes zweites Änderungssignal auszugeben. Schließlich kann in dieser Ausführungsform auch die Sicherungseinheit ausgebildet sein, um die Sicherungsmaßnahme am Elektrowerkzeug zu ergreifen, wenn ein Wert des Änderungssignals den Schwellenwert über- oder unterschreitet und auch ein Wert des zweiten Änderungssignals einen zweiten Schwellenwert über- oder unterschreitet. Dies bietet die Möglichkeit, eine zusätzliche Sicherheit gegen fehlerhaftes Auslösen der Sicherungsmaßnahme zu gewährleisten, da die Auslösung in diesem Fall nur durch ein Über- oder Unterschreiten schreiten von zwei Schwellwerten erfolgt. Eine solche Ausführungsform ist daher toleranter gegen Störungen auf dem Sensorsignal oder zweiten Sensorsignal.

Weiterhin kann auch in einer anderen Ausführungsform die Sicherungseinheit ausgebildet sein, um beim Ergreifen der Sicherungsmaßnahme einen von dem Sensorsignal abhängigen Schwellenwert zu verwenden oder einen extern einstellbaren Schwellenwert zu verwenden. Dies bietet die Möglichkeit, einerseits variable Sicherheitsschwellwerte einstellbar zu machen, die auch eine Überlastung der Maschine berücksichtigen. Außerdem kann durch die Kopplung der Schwellwerte mit dem Sensorsignal beispielsweise eine geringere Auslöseschwelle eingestellt werden, um ein rechtzeitiges Abbremsen des Elektrowerkzeugs bei hoher Betriebsgeschwindigkeit sicherzustellen. Denkbar ist auch, dass ein Bediener einen speziellen gewünschten Schwellenwert einstellen kann, wenn er zum Beispiel in einer besonders kritischen Arbeitsumgebung arbeitet. Zusammenfassend lässt sich sagen, dass durch die Verwendung des variablen Schwellwertes die Sicherheit für den Bediener des Elektrowerkzeugs erhöht werden kann.

In einer weiteren Ausführungsform kann die Sensoreinheit ausgebildet sein, um eine Lage des Elektrowerkzeugs und/oder einen Einspannzustand eines am Elektrowerkzeug eingespannten Werkzeugs zu erfassen und wobei die Sicherungseinheit ausgebildet sein kann, um beim Ergreifen der Sicherungsmaßnahme einen von der erfassten Lage des Elektrowerkzeugs und/oder des Einspannzustandes des am Elektrowerkzeug eingespannten Werkzeugs abhängigen Schwellenwert zu verwenden. Dies bietet den Vorteil, dass eine unterschiedliche Lage des Elektrowerkzeugs (beispielsweise ein "Über-Kopf-Arbeiten") und/oder ein unterschiedlicher Einspannzustand eines Werkzeugs (beispielsweise ein dicker oder dünner Bohrer bzw. eine abgebrochene Schleifscheibe eines Winkelschleifers) bei der Bestimmung des Schwellwertes berücksichtigt wird. Dadurch wird nochmals zusätzlich die Sicherheit des Bedieners erhöht, ohne dass der Bediener hierzu einen eigenen Beitrag leisten müsste.

In einer anderen Ausführungsform der Erfindung ist ein Verfahren zum Ergreifen einer Sicherungsmaßnahme zum Schutz eines Bedieners vor einem Kickback bei einem Blockieren oder Verklemmen eines Elektrowerkzeugs vorgesehen, wobei das Elektrowerkzeug einen Elektromotor mit zumindest einer Feldwicklung und einer Ankerwicklung umfasst und wobei das Verfahren folgende Schritte aufweist:
- Bereitstellen eines Sensorsignals in Abhängigkeit von einem Motorstrom durch den Elektromotor, einer Ankerspannung über die Ankerwicklung, einer Spannung über die Feldwicklung und/oder einer Kommutierungsfrequenz an der Ankerwicklung;
- Erkennen einer zeitlichen Änderung des Sensorsignals und Ausgeben eines entsprechenden Änderungssignals auf der Basis der erkannten Änderung; und
- Ergreifen einer Sicherungsmaßnahme am Elektrowerkzeug bei einem Über- oder Unterschreiten eines Wertes des Änderungssignals in Bezug auf einen Schwellenwert bei Erkennen eines Blockierens
- oder Verklemmens derart, dass die Energiezufuhr des Elektrowerkzeugs unterbrochen, ein mechanisches Bremsen des Elektrowerkzeugs eingeleitet, ein elektrisches oder elektromechanisches Bremsen des Elektrowerkzeugs und/oder ein Blockieren des Elektrowerkzeugs durch eine mechanische oder elektrische Vorrichtung eingeleitet wird.

Auch kann ein Computerprogramm mit Programmcode zur Durchführung des vorstehend genannten Verfahrens vorgesehen sein, wenn das Computerprogramm auf einem Computer durchgeführt wird. Dies ermöglicht, die Steuerung des Ergreifens der Sicherungsmaßnahme mittels der bereits häufig in Elektrowerkzeugen vorhandenen integrierten Schaltungen oder kleinen Computern zugleich für die Steuerung der Auslösung der Sicherungsmaßnahme weiter zu verwenden, was sich somit kostensenkend auswirkt.

### Kurze Beschreibung der Zeichnungen

Die Erfindung wird nachstehend anhand der beigefügten Zeichnungen beispielhaft näher erläutert. Es zeigen:
- Fig. 1: ein Blockschaltbild einer Vorrichtung gemäß einer Ausführungsform der Erfindung;
- Fig. 2: ein Diagramm einer Drehzahl und einer zeitlichen Änderung der Drehzahl aus einem Praxisbeispiel; und
- Fig. 3: ein Ablaufdiagramm eines Verfahrens gemäß einer Ausführungsform der Erfindung.

Im Folgenden können gleiche und/oder funktional gleiche Elemente mit den gleichen Bezugszeichen versehen sein. Die im Folgenden angegebenen absoluten Werte und Maßangaben sind lediglich beispielhafte Werte und stellen keine Einschränkung der Erfindung auf derartige Dimensionen dar.

### Ausführungsbeispiele der Erfindung

Bei modernen Elektrogeräten oder Elektrowerkzeugen wird eine Elektronik verwendet, um Regelung, Leistungssteigerung, Schutzfunktionen oder Zusatzfunktionen zu realisieren. Die Elektronik in modernen Elektrowerkzeugen ist daher häufig mit einem Mikrokontroller ausgestattet, mit dessen Hilfe diese Funktionen realisiert werden.

Der hier vorgestellte Ansatz beschreibt einerseits eine Schutzfunktion für ein Elektrowerkzeug, eine Elektrowerkzeugmaschine oder ein Elektrogerät und andererseits eine Schutzfunktion für den oder die Anwender. Das zu schützende Gerät wie z.B. ein Elektrowerkzeug, eine Elektrowerkzeugmaschine oder ein Elektrogerät wird im Folgenden mit "Elektrogerät" abgekürzt. Bei dem hier vorgestellten Ansatz wird aus einem oder mehreren Motorparametern wie z.B. Motorstrom, Ankerspannung oder ähnlichen Parametern ein zur Drehzahl- oder zur Belastung der Maschine oder des Elektrogerätes proportionales Signal erzeugt. Von diesem Signal, das zur Drehzahl- oder Motorbelastung proportional ist, wird z.B. die Ableitung gebildet. Es ergibt sich z.B. die Drehzahländerungsgeschwindigkeit, die Belastungsänderungsgeschwindigkeit oder ein zu diesen Größen proportionaler Wert. Übersteigt z.B. die Drehzahländerungsgeschwindigkeit oder Belastungsänderungsgeschwindigkeit einen vorgegebenen Schwellwert in einem vorgegebenen Zeitintervall, wird eine definierte Zustandsänderung am Elektrogerät herbeigeführt. Die definierte Zustandsänderung ist das Unterbrechen der Energiezufuhr oder ein gezieltes Bremsen oder Blockieren der Maschine mit einer Zusatzeinrichtung.

Es ergibt sich eine wirkungsvolle Schutzfunktion für den Anwender und das Elektrogerät, wenn durch den hier vorgestellten Ansatz z.B. das Verkanten oder das Verklemmen von einem Winkelschleifer erkannt wird und die Energiezufuhr des Elektrogerätes abgeschaltet wird. Dieser Fall, ausgelöst z.B. durch ein Verkanten oder Verklemmen eines Elektrogerätes, wird im Folgenden mit "Kickback" bezeichnet, wie es bereits vorstehend beschrieben wurde.

In dem hier beschriebenen Ansatz wird zum Erkennen des Kickbackfalls eine zur Drehzahl proportionale Größe verwendet, die z.B. aus den Motorparametern Motorstrom und/oder Ankerspannung oder einer Kombination aus beiden gewonnen wird. Alternativ sieht die vorliegende Beschreibung vor, eine zur Belastung der Maschine proportionale Größe auszuwerten, um den Kickbackfall zu erkennen. Die Belastung der Maschine kann z.B. aus den physikalischen Motorparameter Motorstrom hergeleitet werden. Der Motorstrom kann z.B. über den Spannungsfall an einem Shunt erfasst werden und optional über eine geeignete analoge oder digitale Schaltung ausgewertet werden. Der hier vorgestellte Ansatz sieht ferner vor, eine zur Belastung der Maschine proportionale Größe, wie z.B. den Spannungsfall an einer Feldwicklung des Elektromotors durch eine geeignete analoge oder digitale Schaltung aufzubereiten und entsprechend auszuwerten. Alternativ zu den oben genannten Verfahren kann auch die Drehzahl aus der Kommutierungsfrequenz des Ankers gewonnen werden.

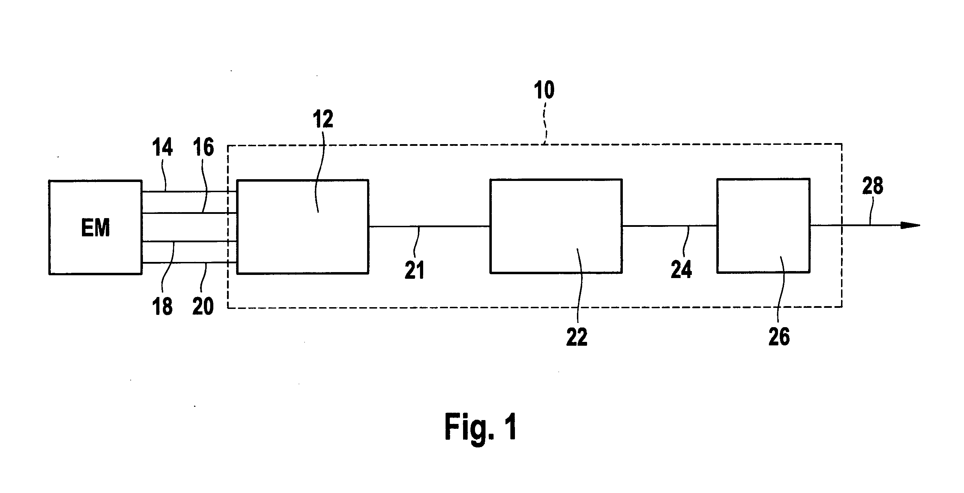

Funktionell gesehen führt der hier vorgestellte Ansatz auf eine Vorrichtung, wie sie im Blockschaltbild gemäß Fig. 1 dargestellt ist. Hierbei ist eine Vorrichtung 10 zum Ergreifen einer Sicherungsmaßnahme bei einem Elektrowerkzeug vorgesehen, wobei das Elektrowerkzeug einen Elektromotor EM mit zumindest einer Feldwicklung und einer Ankerwicklung umfasst. Das Elektrowerkzeug kann dabei eine Bohrmaschine, ein Winkelschleifer, eine Hobelmaschine oder ähnliches sein, wobei diese Werkzeugmaschine jedoch mit einem Elektromotor angetrieben wird. Die Vorrichtung weist eine Sensoreinheit auf, die ausgebildet ist, um in Abhängigkeit von einem Motorstrom 14 durch den Elektromotor EM, einer Ankerspannung 16 über die Ankerwicklung, einer Spannung 18 über die Feldwicklung und/oder einer Kommutierungsfrequenz 20 an der Ankerwicklung ein Sensorsignal bereitzustellen. Diese Motorkenngrößen werden dann durch die in Fig. 1 entsprechenden Signale der Sensoreinheit 12 zugeführt bzw. die Sensoreinheit 12 greift über diese "Abgriffsmöglichkeiten" 14 bis 20 die jeweils benötigte(n) Größe(n) ab. Die Größe(n) müssen auch nicht alle verwendet werden, vielmehr kann auch nur eine einzige der genannten Größen ausgewertet werden oder mehr als eine Größe erfasst, ausgewertet und entsprechend gemeinsam interpretiert werden. Die Sensoreinheit 12 stellt dann das Sensorsignal 21 bereit, das auf der Basis der erfassten Messgröße(n) ausgegeben wird. Es kann auch ein Sensorsignal bereitgestellt werden, das die Information von mehreren Messgrößen umfasst (beispielsweise als Bussignal). Dieses Sensorsignal 21 wird einer Sensorsignal-Änderungserkennungseinheit 22 zugeführt, die ausgebildet ist, um eine zeitliche Änderung des Sensorsignals 21 zu erkennen und auf der Basis der erkannten Änderung ein entsprechendes Änderungssignal 24 auszugeben. Die Auswertung des zeitlichen Änderungsverhaltens kann beispielsweise auf der Basis einer Ableitungsbildung des Sensorsignals erfolgen. Dies ist besonders effizient, wenn die Sensorsignal-Änderungserkennungseinheit 22 die Ableitung auf digitaler Ebene durchführt, da in diesem Fall durch die bereits vorhandenen Routinen der digitalen Signalverarbeitung eine schnelle und zuverlässige Berechnung der Ableitung des Sensorsignals möglich ist. Schließlich wird das Änderungssignal 24 einer Sicherungseinheit 26 zugeführt, die ausgebildet ist, um bei einem Überschreiten eines Wertes des Änderungssignals über einen Schwellenwert eine Sicherungsmaßnahme am Elektrowerkzeug zu ergreifen. Diese Sicherungsmaßnahme ist eine Unterbrechung der Energiezufuhr zum Elektromotor und/oder ein elektrisches oder mechanisches Abbremsen des Elektrowerkzeugs , welches über das Steuersignal 28 von der Sicherungseinheit 26 gesteuert werden kann. Werden mehrere der vorstehenden Sicherungsmaßnahmen zugleich oder zeitlich gering voneinander versetzt getroffen, wird die Wirkung der Sicherungsmaßnahme wesentlich erhöht. Alternativ kann auch die Bremseinheit und/oder der Leistungsschalter zum Abschalten der Energiezufuhr in der Sicherungseinheit 26 angeordnet sein, so dass das externe Steuersignal 28 nicht mehr erforderlich ist.

Vorteile gegenüber den bestehenden Ansätzen ergeben sich dadurch, dass keine zusätzlichen Drehzahlgeber wie z.B. ein Tachorad und keine zusätzlichen Sensoren wie z.B. Impulsaufnehmer zum Erkennen und Auswerten des Kickback-Falls erforderlich sind.

Der hier vorgestellte Ansatz beschreibt eine Vorrichtung, mit deren Hilfe eine schnelle Drehzahländerung oder Belastungsänderung, verursacht z.B. durch ein Verklemmen oder Blockieren eines Elektrogerätes, erkannt wird und eine Zustandsänderung am Elektrogerät herbeiführt, die zum Schutz des oder der Anwender(s) und des Elektrogerätes führen. Vorteile durch den vorgestellten Ansatz ergeben sich vor allem im Aufbau des Elektrogerätes bzw. der erforderlichen Sensoren am Elektrogerät.

Erzeugen eines zur Drehzahl proportionalen Signals oder eines zur Belastung des Elektrogerätes proportionalen Signals

Eine detaillierte Beschreibung der Erfassung und Auswertung eines zur Drehzahl proportionalen Signals oder eines zur Belastung der Maschine proportionalen Signals ist ausführlich in der Patentanmeldung "Motorkenngrößen-Detektor und Verfahren zum Bereitstellen eines Drehzahl-Detektionssignals und/oder eines Drehmoment-Detektionssignals" des selben Anmelders und desselben Erfinders beschrieben, die am gleichen Anmeldetag wie die vorliegende Patentanmeldung eingereicht wurde.

Die Erzeugung eines zur Drehzahl oder eines zur Belastung der Maschine proportionalen Signals kann z.B. aus folgenden Größen oder ähnlichen Größen generiert werden:
- Motorstrom und/oder Ankerspannung
- Motorstrom
- Induzierte Spannung in einer Wicklung oder in einer Hilfswicklung
- Auswertung der Kommutierungsfrequenz

Die Generierung eines zur Drehzahl oder Belastung der Maschine proportionalen Signals ist in der vorstehend genannten Patentanmeldung "Motorkenngrößen-Detektor und Verfahren zum Bereitstellen eines Drehzahl-Detektionssignals und/oder eines Drehmoment-Detektionssignals" ausführlich beschrieben. Der darin beschriebene Ansatz zeichnet sich dadurch aus, dass minimal eine zusätzliche Leitung zum Anker des Motors erforderlich ist.

Die Generierung eines zur Belastung der Maschine proportionalen Signals ist in der vorstehend genannten Patentanmeldung "Motorkenngrößen-Detektor und Verfahren zum Bereitstellen eines Drehzahl-Detektionssignals und/oder eines Drehmoment-Detektionssignals" ausführlich beschrieben. Für das erfindungsgemäße Verfahren ist im einfachsten Fall keine oder alternativ eine zusätzliche Leitung zum Elektromotor erforderlich.

Alternativ zu den obigen Ansätzen kann auch die induzierte Spannung in einer Wicklung öder einer Hilfswicklung ausgewertet werden und daraus ein zur Drehzahl oder zur Belastung der Maschine proportionales Signal generiert werden.

Ein weiterer Ansatz sieht vor, die Drehzahl aus der Kommutierungsfrequenz des Ankers zu erzeugen. Dazu wird die Kommutierungsfrequenz z.B. am Anker abgenommen und beispielsweise noch über eine geeignete analoge oder digitale Schaltung verstärkt. Ein zur Drehzahl proportionales Signal wird z.B. über die Zerlegung des gewonnenen Signals in die enthaltenen Frequenzanteile z.B. mit Hilfe einer Fourier-Transformation gewonnen. Über z.B. eine Plausibilitätskontrolle oder selektive Filterung oder ein ähnliches Verfahren kann ein zur Drehzahl proportionales Signal erzeugt werden.

Auswerten des von der Drehzahl- oder der Belastung abhängigen Signals Die Auswertung des drehzahl- oder belastungsabhängigen Signals zum Erkennen z.B. eines "Kickback" kann, wie in der vorstehend beschriebenen Patentanmeldung "Verfahren zur Abschaltung einer Elektrowerkzeugmaschine in einem Blockierfall und Elektrowerkzeugmaschine", durch eine Differenzbildung von Halbwelle zu Halbwelle erfolgen. Überschreitet die Differenz zu einem diskreten Zeitpunkt t einen Schwellwert X, wird eine Zustandsänderung herbeigeführt.

Dieser Ansatz lässt sich in der Praxis sehr leicht umsetzen, kann jedoch durch weitere mathematische Verfahren optimiert werden. Dazu wird, wie oben beschrieben, ein zur Drehzahl des Elektrogerätes oder zur Belastung des Elektrogerätes proportionales Signal erzeugt. Natürlich kann für die Auswertung nach diesem Verfahren statt einem zur Drehzahl proportionalen Signal auch die Drehzahl verwendet werden. Störungen auf dem zur Drehzahl proportionalen Signal sind in der Praxis häufig anzutreffen. Störungen können z.B. durch das Bürstenfeuer, Netzstörungen, andere Maschinen oder Ähnliches hervorgerufen werden.

Störungen auf dem zur Drehzahl proportionalen Signal können z.B. durch geeignete Filter wie z.B. Präsenzfilter, Absenzfilter, Bandpassfilter, Hochpass- und Tiefpass-Filter, Butterworthfilter, Tschebyschefffilter, Bessel- bzw. Thomsonfilter, Cauer-Filter, Rangordnungsfilter (z.B. Minimumfilter, Medianfilter, Maximumfilter), IIR-Filter (infinite duration impulse response filter) und FIR-Filter (finite impulse response filter) reduziert oder eliminiert werden.

Der hier vorgestellte Ansatz sieht zur Filterung alle gängigen linearen, nichtlinearen und gewichteten Filterfunktionen vor oder ähnliche mathematische Verfahren. Die Auswertung wird erleichtert, indem die zeitliche Änderung des Signals gebildet wird. Die Auswertung eines zur Drehzahl- oder Belastung proportionalen Signals soll hier anhand eines Praxisbeispiels mit einem Zweihandwinkelschleifer näher veranschaulicht werden.

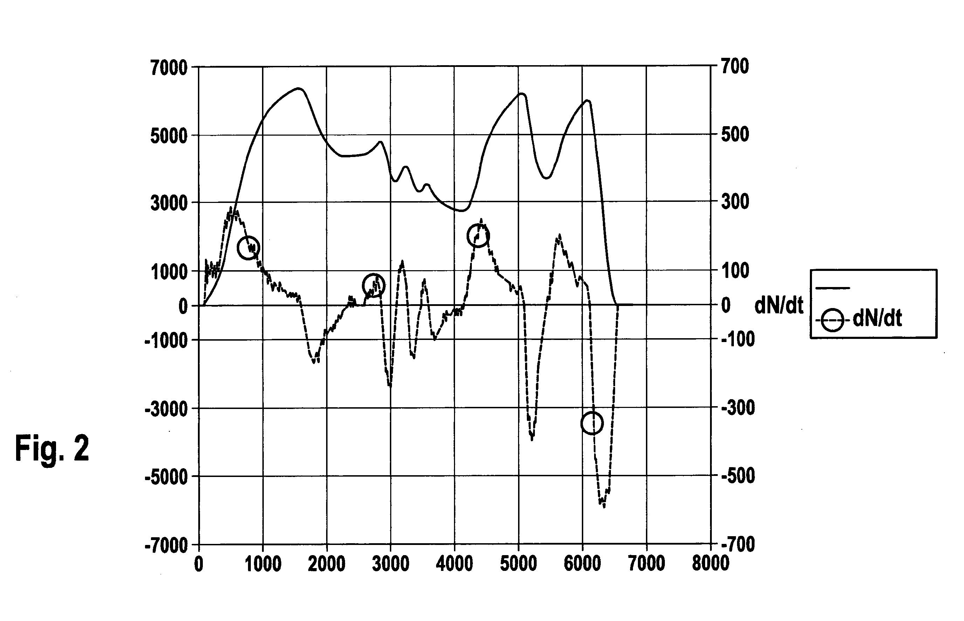

Die in Fig. 2 dargestellten Signale wurden an einem Zweihandwinkelschleifer aufgezeichnet. Der Zweihandwinkelschleifer in diesem Beispiel hat eine Leerlaufdrehzahl von ca. 6500 U/min. Der Zweihandwinkelschleifer aus Fig. 2 wurde durch das Arbeiten an einem Werkstück unregelmäßig belastet. Am Ende des Versuches verklemmt er sich im Werkstück, und es kommt zu einem "Kickback". Das zur Drehzahl proportionale Signal ist in Fig. 2 dunkel dargestellt. Störungen auf dem zur Drehzahl proportionalen Signal konnten mit einem Mittelwertfilter weitestgehend eliminiert werden.

Die zeitliche Änderung der Drehzahl dN/dt ist in Fig. 2 hell mit einem Kreis dargestellt. Überschreitet die zeitliche Änderung der Drehzahl einen Wert von z.B. -500, wird ein Kickback erkannt. Eine Zustandsänderung am Elektrogerät kann herbeigeführt werden. Mögliche Zustandsänderungen am Elektrogerät sind im Abschnitt "Mögliche Zustandsänderungen beim Erkennen z.B. eines Kickback am Elektrogerät" beschrieben.

Der Schwellwert zum Auslösen der Kickback-Funktion kann in Abhängigkeit von Parametern oder Maschinenparametern variiert werden.
Mögliche Parameter oder Maschinenparameter sind:
- Die Drehzahl oder ein zur Drehzahl proportionales Signal
- Die Belastung der Maschine oder ein zur Belastung der Maschine proportionales Signal
- Ein Signal das mit der Hilfe von z.B. zusätzlichen Sensoren am Elektrogerät gebildet wird. Dieses Signal kann z.B. Auskunft darüber geben wie die Maschine gehalten oder eingespannt ist.
- Über ein Bedienelement, das dem Anwender zur Verfügung steht
- Über eine Bedienereingabe

Wird z.B. ein Kickback am Elektrogerät erkannt, wird eine definierte Zustandsänderung am Elektrogerät herbeigeführt. Die definierte Zustandsänderung ist das Unterbrechen der Energiezufuhr oder ein gezieltes Bremsen oder Blockieren der Maschine mit einer Zusatzeinrichtung.
Mögliche Zustandsänderungen sind z.B. :
- Unterbrechen der Energiezufuhr des Elektrogerätes
- Mechanisches Bremsen des Elektrogerätes
- Elektrisches Bremsen des Elektrogerätes
- Elektromechanisches Bremsen des Elektrogerätes
- Blockieren des Elektrogerätes durch eine mechanische oder elektrische Vorrichtung.

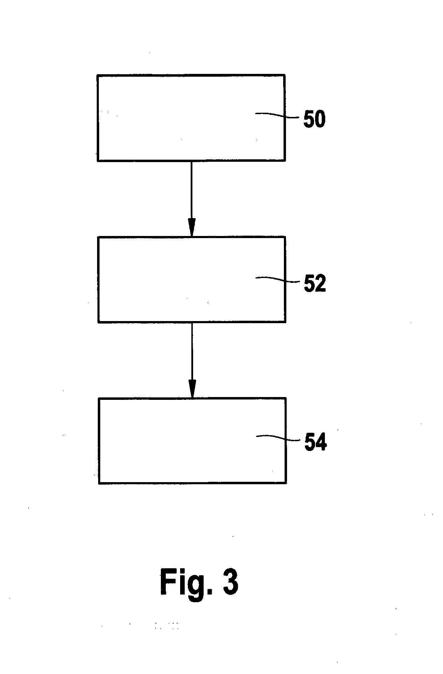

Entsprechend der vorstehenden Beschreibung lässt sich auch der erfindungsgemäße Ansatz in Form des in Fig. 3 dargestellten Ablaufdiagramms eines Verfahrens skizzieren. Hierbei umfasst das Verfahren einen Schritt des Bereitstellens 50 eines Sensorsignals in Abhängigkeit von einem Motorstrom durch den Elektromotor, einer Ankerspannung über die Ankerwicklung, einer Spannung über die Feldwicklung und/oder einer Kommutierungsfrequenz an der Ankerwicklung. Weiterhin umfasst das Verfahren den Schritt des Erkennens 52 einer zeitlichen Änderung des Sensorsignals und Ausgeben eines entsprechenden Änderungssignals auf der Basis der erkannten Änderung. Schließlich umfasst das Verfahren den Schritt des Ergreifens 54 einer Sicherungsmaßnahme am Elektrowerkzeug bei einem Über- oder Unterschreiten eines Wertes des Änderungssignals in Bezug auf einen oberen bzw. unteren Schwellenwert.

Zusammenfassend ist anzumerken, dass sich die folgenden Aspekte mit der vorliegenden Erfindung gut umsetzen lassen:
- Auswertung eines zur Drehzahl oder Belastung der Maschine proportionalen Signals und Herbeiführen einer Zustandsänderung am Elektrogerät, wenn in einem vorgegebenen Zeitintervall ein vorgegebener Schwellwert überschritten wird
- Auswertung der Drehzahländerungsgeschwindigkeit und/oder Belastungsänderungsgeschwindigkeit und Auslösen einer Zustandsänderung am Elektrogerät bei einem Überschreiten bzw. Unterschreiten eines bestimmten Schwellwertes X zu einem bestimmten Zeitpunkt t
- Erfassen des zur Drehzahl oder zur Belastung der Maschine proportionalen Signals ohne zusätzliche Sensorik an der Maschine
- Erfassen der Motorparameter Motorstrom und/oder Ankerspannung mit Hilfe keiner oder minimal einer zusätzlichen Leitung zum Motor
- Einfaches Erfassen der Motorparameter Ankerspannung und Ankerstrom über ein Abtastverfahren wie es in der Patentanmeldung "Motorkenngrößen-Detektor und Verfahren zum Bereitstellen eines Drehzahl-Detektionssignals und/oder eines Drehmoment-Detektionssignals" beschrieben ist und
- Erstellen eines zur Drehzahl proportionalen Signals aus der Kommutierungsfrequenz

## Patentansprüche

1. Vorrichtung (10) zum Ergreifen einer Sicherungsmaßhahme zum Schutz eines Bedieners vor einem Kickback bei einem Blockieren oder Verklemmen eines Elektrowerkzeugs, wobei das Elektrowerkzeug einen Elektromotor (EM) mit zumindest einer Feldwicklung und einer Ankerwicklung umfasst und wobei die Vorrichtung (10) folgende Merkmale aufweist:
- eine Sensoreinheit (12), die ausgebildet ist, um ein Sensorsignal (21) in Abhängigkeit von einem Motorstrom (14) durch den Elektromotor (EM), einer Ankerspannung (16) über die Ankerwicklung, einer Spannung (18) über die Feldwicklung und/oder einer Kommutierungsfrequenz (20) an der Ankerwicklung bereitzustellen;
- eine Sensorsignal-Änderungserkennungseinheit (22), die ausgebildet ist, um eine zeitliche Änderung des Sensorsignals (21) zu erkennen und auf der Basis der erkannten Änderung ein entsprechendes Änderungssignal (24) auszugeben; und
- eine Sicherungseinheit (26), die ausgebildet ist, um abhängig von einem Wert des Änderungssignals (24), insbesondere bei einem Über- oder Unterschreiten des Wertes des Änderungssignals (24) in Bezug auf einen Schwellenwert ein Blockieren oder Verklemmen zu erkennen und eine Sicherungsmaßnahme (28) am Elektrowerkzeug derart zu ergreifen, dass die Energiezufuhr des Elektrowerkzeugs unterbrochen, ein mechanisches Bremsen des Elektrowerkzeugs eingeleitet, ein elektrisches oder elektromechanisches Bremsen des Elektrowerkzeugs und/oder ein Blockieren des Elektrowerkzeugs durch eine mechanische oder elektrische Vorrichtung eingeleitet wird.

2. Vorrichtung (10) gemäß Anspruch 1, **dadurch gekennzeichnet, dass** die Sensorsignal-Änderungserkennungseinheit (22) und/oder die Sicherungseinheit (26) ausgebildet sind, um eine digitale Signalverarbeitung durchzuführen.

3. Vorrichtung (10) gemäß einem der Ansprüche 1 oder 2, **dadurch gekennzeichnet, dass** die Sensorsignal-Änderungserkennungseinheit (22) ausgebildet ist, um vor dem Erkennen einer zeitlichen Änderung des Sensorsignals eine Filterung des Sensorsignals (21) durchzuführen.

4. Vorrichtung (10) gemäß Anspruch 3, **dadurch gekennzeichnet, dass** die Sensorsignal-Änderungserkennungseinheit (22) ausgebildet ist, um eine Filterung auf der Basis einer linearen, nicht-linearen und/oder gewichteten Filterfunktion durchzuführen oder einer Fourier-Transformation des Sensorsignals (21) durchzuführen.

5. Vorrichtung (10) gemäß einem der vorhergehenden Ansprüche, **dadurch gekennzeichnet, dass**
- die Sensoreinheit (12) ausgebildet ist, um in Abhängigkeit von einem Motorstrom (14) durch den Elektromotor (EM), einer Ankerspannung.(16) über die Ankerwicklung, einer Spannung (18) über die Feldwicklung und/oder einer Kommutierungsfrequenz (20) an der Ankenwicklung ein zweites Sensorsignal bereitzustellen, das sich vom Sensorsignal (21) unterscheidet;
- die Sensorsignal-Änderungserkennungseinheit (22) ausgebildet ist, um eine zeitliche Änderung des zweiten Sensorsignals zu erkennen und auf der Basis der erkannten Änderung ein entsprechendes zweites Änderungssignal auszugeben; und
- die Sicherungseinheit (26) ausgebildet ist, um die Sicherungsmaßnahme am Elektrowerkzeug zu ergreifen, wenn ein Wert des Änderungssignals (24) den Schwellenwert über- oder unterschreitet und auch ein Wert des zweiten Änderungssignals einen zweiten Schwellenwert über- oder unterschreitet.

6. Vorrichtung (10) gemäß einem der vorhergehenden Ansprüche, **dadurch gekennzeichnet, dass** die Sicherungseinheit (26) ausgebildet ist, um beim Ergreifen der Sicherungsmaßnahme einen von dem Sensorsignal (21) abhängigen Schwellenwert oder von einem extern einstellbaren Schwellenwert zu verwenden.

7. Vorrichtung (10) gemäß einem der vorhergehenden Ansprüche, **dadurch gekennzeichnet, dass** die Sensoreinheit (12) ausgebildet ist, um eine Lage des Elektrowerkzeugs und/oder einen Einspannzustand eines am Elektrowerkzeug eingespannten Werkzeugs zu erfassen und wobei die Sicherungseinheit (26) ausgebildet ist, um beim Ergreifen der Sicherungsmaßnahme einen von der erfassten Lage des Elektrowerkzeugs und/oder des Einspannzustandes des am Elektrowerkzeug eingespannten Werkzeugs abhängigen Schwellenwert zu verwenden.

8. Verfahren zum Ergreifen einer Sicherungsmaßnahme zum Schutz eines Bedieners vor einem Kickback bei einem Blockieren oder Verklemmen eines Elektrowerkzeugs, wobei das Elektrowerkzeug einen Elektromotor (EM) mit zumindest einer Feldwicklung und einer Ankerwicklung umfasst und wobei das Verfahren folgende Schritte aufweist:
- Bereitstellen (50) eines Sensorsignals (21) in Abhängigkeit von einem Motorstrom (14) durch den Elektromotor (EM), einer Ankerspannung (16) über die Ankerwicklung, einer Spannung (18) über die Feldwicklung und/oder einer Kommutierungsfrequenz (20) an der Ankerwicklung;
- Erkennen (52) einer zeitlichen Änderung des Sensorsignals (21) und Ausgeben eines entsprechenden Änderungssignals (24) auf der Basis der erkannten Änderung; und
- Ergreifen (28) einer Sicherungsmaßnahme am Elektrowerkzeug bei einem Über- oder Unterschreiten eines Wertes des Änderungssignals (24) in Bezug auf einen Schwellenwert bei Erkennen eines Blockierens oder Verklemmens derart, dass die Energiezufuhr des Elektrowerkzeugs unterbrochen, ein mechanisches Bremsen des Elektrowerkzeugs eingeleitet, ein elektrisches oder elektromechanisches Bremsen des Elektrowerkzeugs und/oder ein Blockieren des Elektrowerkzeugs durch eine mechanische oder elektrische Vorrichtung eingeleitet wird.

9. Computerprogramm mit Programmcode zur Durchführung des Verfahrens gemäß Anspruch 9, wenn das Computerprogramm auf einem Computer durchgeführt wird.

## Claims

1. Device (10) for adopting a safety measure for protecting a user against kick-back in the event of blocking or jamming of a power tool, wherein the power tool comprises an electric motor (EM) with at least one field winding and one armature winding and wherein the device (10) has the following features:
- a sensor unit (12) which is designed to provide a sensor signal (21) on the basis of a motor current (14) through the electric motor (EM), an armature voltage (16) across the armature winding, a voltage (18) across the field winding and/or a commutation frequency (20) on the armature winding;
- a change in sensor signal detection unit (22) which is designed to detect a temporal change in the sensor signal (21) and to output a corresponding change signal (24) on the basis of the detected change; and
- a safety unit (26) which is designed to detect blocking or jamming on the basis of a value of the change signal (24), in particular in the event of the value of the change signal (24) exceeding or falling below a threshold value and to adopt a safety measure (28) on the power tool such that the power supply to the power tool is interrupted, mechanical braking of the power tool is introduced, electrical or electromechanical braking of the power tool and/or blocking of the power tool by a mechanical or electrical device is introduced.

2. Device (10) according to Claim 1, **characterized in that** the change in sensor signal detection unit (22) and/or the safety unit (26) are designed to perform digital signal processing.

3. Device (10) according to either of Claims 1 and 2, **characterized in that** the change in sensor signal detection unit (22) is designed to perform filtering of the sensor signal (21) before detecting a temporal change in the sensor signal.

4. Device (10) according to Claim 3, **characterized in that** the change in sensor signal detection unit (22) is designed to perform filtering on the basis of a linear, non-linear and/or weighted filter function or to perform a Fourier transform on the sensor signal (21).

5. Device (10) according to any of the preceding claims, **characterized in that**
- the sensor unit (12) is designed to provide a second sensor signal, which differs from the sensor signal (21), on the basis of a motor current (14) through the electric motor (EM), an armature voltage (16) across the armature winding, a voltage (18) across the field winding and/or a commutation frequency (20) at the armature winding;
- the change in sensor signal detection unit (22) is designed to detect a temporal change in the second sensor signal and to output a corresponding second change signal on the basis of the detected change; and
- the safety unit (26) is designed to adopt the safety measure on the power tool if a value of the change signal (24) exceeds or falls below the threshold value and also a value of the second change signal exceeds or falls below a second threshold value.

6. Device (10) according to any of the preceding claims, **characterized in that** the safety unit (26) is designed to use a threshold value which is dependent on the sensor signal (21) or an externally adjustable threshold value when adopting the safety measure.

7. Device (10) according to any of the preceding claims, **characterized in that** the sensor unit (12) is designed to acquire a position of the power tool and/or a chuck state of a tool chucked on the power tool and wherein the safety unit (26) is designed to use a threshold value which is dependent on the acquired position of the power tool and/or the chuck state of the tool chucked on the power tool when adopting the safety measure.

8. Method for adopting a safety measure for protecting a user against kick-back in the event of blocking or jamming of a power tool, wherein the power tool comprises an electric motor (EM) with at least one field winding and one armature winding and wherein the method has the following steps:
- providing (50) a sensor signal (21) on the basis of a motor current (14) through the electric motor (EM) an armature voltage (16) across the armature winding, a voltage (18) across the field winding and/or a commutation frequency (20) on the armature winding;
- detecting (52) a temporal change in the sensor signal (21) and outputting a corresponding change signal (24) on the basis of the detected change; and
- adopting (28) a safety measure on the power tool in the event of the value of the change signal (24) exceeding or falling below a threshold value when blocking or jamming is detected, such that the power supply to the power tool is interrupted, mechanical braking of the power tool is introduced, electrical or electromechanical braking of the power tool and/or blocking of the power tool by a mechanical or electrical device is introduced.

9. Computer program with program code for performing the method according to Claim 8, when the computer program is executed on a computer.

## Revendications

1. Dispositif (10) destiné à entreprendre une mesure de sécurisation en vue de protéger un utilisateur contre un rebond en cas de blocage ou de coincement d'un outil électrique, l'outil électrique comprenant un moteur électrique (EM) ayant au moins une bobine d'inducteur et un enroulement d'induit, et le dispositif (10) possédant les caractéristiques suivantes :
- une unité à capteur (12) qui est configurée pour délivrer un signal de capteur (21) en fonction d'un courant de moteur (14) à travers le moteur électrique (EM), d'une tension d'induit (16) aux bornes de l'enroulement d'induit, d'une tension (18) aux bornes de la bobine d'inducteur et/ou d'une fréquence de commutation (20) au niveau de l'enroulement d'induit ;
- une unité de détection de variation de signal de capteur (22) qui est configurée pour détecter une variation dans le temps du signal de capteur (21) et pour délivrer un signal de variation (24) correspondant sur la base de la variation détectée ; et
- une unité de sécurisation (26) qui est configurée pour, en fonction d'une valeur du signal de variation (24), notamment dans le cas d'un franchissement vers le haut ou le bas d'une valeur de seuil par la valeur du signal de variation (24), détecter un blocage ou un coincement et entreprendre une mesure de sécurisation (28) au niveau de l'outil électrique de telle sorte que l'arrivée d'énergie vers l'outil électrique est interrompue, un freinage mécanique de l'outil électrique est initié, un freinage électrique ou électromécanique de l'outil électrique et/ou un blocage de l'outil électrique par un dispositif mécanique ou électrique sont initiés.

2. Dispositif (10) selon la revendication 1, **caractérisé en ce que** l'unité de détection de variation de signal de capteur (22) et/ou l'unité de sécurisation (26) sont configurées pour effectuer un traitement numérique du signal.

3. Dispositif (10) selon l'une des revendications 1 ou 2, **caractérisé en ce que** l'unité de détection de variation de signal de capteur (22) est configurée pour effectuer un filtrage du signal de capteur (21) avant la détection d'une variation dans le temps du signal de capteur.

4. Dispositif (10) selon la revendication 3, **caractérisé en ce que** l'unité de détection de variation de signal de capteur (22) est configurée pour effectuer un filtrage sur la base d'une fonction de filtrage linéaire, non linéaire et/ou pondérée ou pour effectuer une transformée de Fourier du signal de capteur (21).

5. Dispositif (10) selon l'une des revendications précédentes, **caractérisé en ce que**
- l'unité à capteur (12) est configurée pour, en fonction d'un courant de moteur (14) à travers le moteur électrique (EM), d'une tension d'induit (16) aux bornes de l'enroulement d'induit, d'une tension (18) aux bornes de la bobine d'inducteur et/ou d'une fréquence de commutation (20) au niveau de l'enroulement d'induit, délivrer un deuxième signal de capteur qui est différent du premier signal de capteur (21) ;
- l'unité de détection de variation de signal de capteur (22) est configurée pour détecter une variation dans le temps du deuxième signal de capteur et pour délivrer un deuxième signal de variation correspondant sur la base de la variation détectée ; et
- l'unité de sécurisation (26) est configurée pour entreprendre la mesure de sécurisation au niveau de l'outil électrique lorsqu'une valeur du signal de variation (24) franchit la valeur de seuil vers le haut ou le bas et aussi lorsqu'une valeur du deuxième signal de variation franchit une deuxième valeur de seuil vers le haut ou le bas.

6. Dispositif (10) selon l'une des revendications précédentes, **caractérisé en ce que** l'unité de sécurisation (26) est configurée pour, lorsqu'elle entreprend la mesure de sécurisation, utiliser une valeur de seuil dépendante du signal de capteur (21) ou une valeur de seuil réglable extérieurement.

7. Dispositif (10) selon l'une des revendications précédentes, **caractérisé en ce que** l'unité à capteur (12) est configurée pour détecter une position de l'outil électrique et/ou un état de serrage d'un outil serré sur l'outil électrique et l'unité de sécurisation (26) étant configurée pour, lorsqu'elle entreprend la mesure de sécurisation, utiliser une valeur de seuil dépendante de la position détectée de l'outil électrique et/ou de l'état de serrage de l'outil serré sur l'outil électrique.

8. Procédé destiné à entreprendre une mesure de sécurisation en vue de protéger un utilisateur contre un rebond en cas de blocage ou de coincement d'un outil électrique, l'outil électrique comprenant un moteur électrique (EM) ayant au moins une bobine d'inducteur et un enroulement d'induit, et le procédé comprenant les étapes suivantes :
- délivrance (50) d'un signal de capteur (21) en fonction d'un courant de moteur (14) à travers le moteur électrique (EM), d'une tension d'induit (16) aux bornes de l'enroulement d'induit, d'une tension (18) aux bornes de la bobine d'inducteur et/ou d'une fréquence de commutation (20) au niveau de l'enroulement d'induit ;
- détection (52) d'une variation dans le temps du signal de capteur (21) et délivrance d'un signal de variation (24) correspondant sur la base de la variation détectée ; et
- prise (28) d'une mesure de sécurisation au niveau de l'outil électrique dans le cas d'un franchissement vers le haut ou le bas d'une valeur de seuil par une valeur du signal de variation (24) en cas de détection d'un blocage ou d'un coincement de telle sorte que l'arrivée d'énergie vers l'outil électrique est interrompue, un freinage mécanique de l'outil électrique est initié, un freinage électrique ou électromécanique de l'outil électrique et/ou un blocage de l'outil électrique par un dispositif mécanique ou électrique sont initiés.

9. Programme informatique comprenant un code de programme destiné à mettre en oeuvre le procédé selon la revendication 8 lorsque le programme informatique est exécuté sur un ordinateur.
